# EUROPEAN PATENT APPLICATION

(11) **EP 3 462 425 A1**
(43) Date of publication of application: **03.04.2019**
(21) Application number: 17194037.2
(22) Date of filing: 29.09.2017
(51) Int. Cl.: G08G 1/0962, B60W 40/10, G08G 1/14, G08G 1/16

(54) **PARKING SPACE JUDGMENT SYSTEM**

(71) Applicant: Deutsche Telekom AG, 53113 Bonn (DE)
(72) Inventor: LAWRENSON, Matthew John, 1030 Bussigny (CH); NOLAN, Julian Charles, 1009 Pully (CH); JAKUBEK, Sascha, 50858 Köln (DE)
(74) Representative: Vossius & Partner Patentanwälte Rechtsanwälte mbB

(57) **Abstract**

A system for judging the suitability of parking a vehicle in one or more parking spaces in one or more parking locations, the system comprising: a map to guide the vehicle; a location properties database to store data pertaining to the parking locations; a receiver unit to receive gathered data from the vehicle when the vehicle is making a parking maneuver; a vehicle database to store data pertaining to a plurality of parking maneuvers of the vehicle and a plurality of self-parking algorithms for the vehicle; a location assessment algorithm to determine a parking requirement of the vehicle; and a user interface to receive instructions from a user and to provide a parking suitability metric to the user of the system.

## Description

The present invention relates to a parking space judgment system to judge the suitability of parking a vehicle in one or more parking spaces in one or more parking locations and methods thereof.

In general, parking affects both the users of vehicles and the general population.

When planning a journey, the location of a car park and time to park a vehicle can be important considerations. This is especially the case in populated areas where parking occupancy tends to be high.

Furthermore, parking of a vehicle is often chargeable, either by the owner of a parking location or by a government body, therefore the cost of parking may also be an important consideration for the vehicle's owner or user.

Additionally, the user may wish to combine their vehicle journey with the use of public transport, so again the location of parking and time to park may well be important considerations.

A final consideration is that parking can be frustrating to the user, with most drivers agreeing that it is one of the least pleasurable parts of a journey.

Furthermore, since all vehicles cause pollution at some level, hence increased vehicle use whilst finding parking potentially contributes to the degradation of the environment. By having a clearer view of the parking situation at their destination, a vehicle driver can make choices that reduce the environmental impact of their journey.

Moreover, as with the previous example, if the user is able to conveniently combine a vehicle journey with the use of public transport then they have additional options to reduce their environmental impact.

Many new vehicles have the ability to park themselves using 'Automatic Parking' features. In the present invention, the vehicle has (i) a set of sensors able to gauge the distance between the vehicle and surrounding objects, (ii) the ability to automatically control its motion and (iii) a set of algorithms that guide the parking process.

Additionally, different preferred embodiments are possible, for example, some require the user to control the speed of the vehicle, whereas some do this automatically, similarly some require the user to change gear whilst again this is automatic in some embodiments. Nevertheless, the user controls the steering (and hence direction) of the vehicle during the parking maneuver.

Furthermore, some modern systems do not require the user to be in the vehicle, and the vehicle can instead be controlled via a smartphone application.

Hence, there is a need to allow a user to judge the suitability of a parking location to either (i) their own parking preferences, or (ii) the abilities of their vehicle's self-parking technology.

Accordingly, the present invention is directed to a parking space judgment system for judging the suitability of parking a vehicle in one or more parking spaces in one or more parking locations and methods thereof that substantially obviates one or more of the above problems.

To achieve the above objects and according to an aspect of the present invention, there is provided a parking space judgment system for judging the suitability of parking a vehicle in one or more parking spaces in one or more parking locations, the system comprising: a map to guide the vehicle; a location properties database to store data pertaining to the parking locations; a receiver unit to receive gathered data from the vehicle when the vehicle is making a parking maneuver; a vehicle database to store data pertaining to a plurality of parking maneuvers of the vehicle and a plurality of self-parking algorithms for the vehicle; a location assessment algorithm to determine a parking requirement of the vehicle; and a user interface to receive instructions from a user and to provide a parking suitability metric to the user of the system.

The location assessment algorithm may comprise data showing a fit on the parking capability of the vehicle; and a desired parking space of the parking location.

The self-parking algorithm may be configured to control the parking of the vehicle into the parking space.

The vehicle database may include data pertaining to motion, and/or distance and/or angle of rotation gathered by a sensor on the vehicle during parking maneuvers.

The location assessment algorithm may compare the vehicle parking requirement and the parking location data to calculate a parking location assessment result.

The parking suitability metric may comprise guidance on whether the parking space is deemed fit or unfit for parking.

The parking suitability metric may be calculated using the parking location assessment result and parking signature data.

The parking signature data may comprise data that indicates an occurrence of the parking event.

According to another aspect of the present invention, there is provided a vehicle for data collection, the data for use in the system above, comprising: a plurality of sensors for sensing data such as acceleration, and/or orientation, and/or motion of the vehicle in order to classify the data as parking maneuvers; a controller configured to initiate the gathering of data by the sensors when the vehicle is making a parking maneuver; a communication unit to send the gathered data to the system; a software application to receive instructions and information from a user, and to display a parking suitability metric to the user.

The software application may be installed on a portable electronic device.

According to a further aspect of the present invention, there is provided a method for providing a user with guidance on the suitability of one or more parking spaces in one or more parking locations, the method comprising the steps of: (a) a parking assessment process to select a desired parking location and calculate a parking assessment result; and (b) an assessment comparison process to calculate a parking suitability metric based on the parking assessment result.

The parking assessment process may comprise: selecting the desired parking location; determining a vehicle parking requirement by querying a vehicle database; determining parking location data by querying a location properties database; and calculating the parking assessment result by using a location assessment algorithm, wherein the location assessment algorithm compares the vehicle parking requirement with the parking location data.

The location assessment algorithm may comprise data showing a fit on a parking capability of the vehicle; and a parking space of the parking location.

The parking location data may comprise percentage guidance on difficulties of parking in the parking location.

The assessment comparison process may comprise: using a parking location assessment result and the parking signature data as input to calculate a parking suitability metric; and displaying the parking suitability metric to the user via a user interface.

The parking signature data may comprise the user parking signature data and/or the vehicle parking signature data.

The user parking signature data may be data on a parking capability and preference of the user. The vehicle parking signature may be data on a parking maneuver and the parking capability of the vehicle.

The parking location assessment result may comprise tolerances on the parking signature data and when the parking space is within the tolerances, the parking space is deemed fit for parking.

The parking suitability metric may comprise guidance on whether the parking space is deemed fit or unfit for parking.

According to another aspect of the present invention, there is provided a method for collecting data with a vehicle described above, the method may comprise: collecting data sensed by a sensor on the vehicle, wherein the data includes motion data of the vehicle; comparing the sensed data to a parking signature data to determine if a parking event occurs, wherein the parking signature data comprises data that indicates an occurrence of the parking event; storing the sensed data in a vehicle database when the sensed data is determined as the parking event.

Additionally, either (i) a user's historic parking maneuvers may be stored and assessed, or (ii) a vehicle's self-parking algorithms may be categorized.

The parking maneuvers used by a plurality of vehicles and drivers at a certain Parking Location may be stored and assessed.

An assessment may be made of the likely match between the vehicles/users parking capacity and the properties of the spaces in a given Parking Location, and based on this, information is given to the user to allow a choice to be made as to whether they wish to park in that location or choose another (in some embodiments this choice may be automatically made by the system).

The Parking Location will likely have multiple Parking Spaces, and the Parking Spaces may vary in their properties. The method may take an average view of the properties of Parking Spaces in each location. Hence, the smaller the Parking Location is, the more accurate the assessment will be. Therefore, the invention will benefit if the Parking Locations can be sub-divided in a fine-grained but logical way.

According to the above-described system, vehicle and/or methods, the present invention has the advantageous effect of allowing a user to know (i) whether a vehicle's self-parking algorithms are likely to be able to park in a given location, or (ii) whether the spaces within a given Parking Location are likely to be thought of as comfortable or difficult parking maneuver for a user according to the user's historic parking data.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic of a parking space judgment system according to an embodiment of the present invention;
FIG. 2a is a schematic of the Collection of Parking Assessment Data Process according to an embodiment of the present invention;
FIG. 2b is a schematic of the Parking Assessment Process according to an embodiment of the present invention; and
FIG. 2c is a schematic of the Assessment Comparison Process according to an embodiment of the present invention.
FIG. 3 describes a number of parameters for parallel parking used in the Vehicle's Parking Requirement.
FIGs. 5 to 7 show a first example of a working scenario.

### DETAILED DESCRIPTION OF THE INVENTION

In the following description, the terminologies described below are defined in consideration of functions in the present invention. However, the elements of the present invention should not be limited by the terminologies used in the specification of the present invention. That is, such terminologies will be used only to differentiate one element from other elements of the present invention.

Thus, the term "parking location" refers to a geographical zone containing parking spaces. Examples of Parking Locations include streets that contain areas where drivers can legally park, a car park or an area of ground where parking takes place. A Parking Location typically contains a plurality of Parking Spaces.

The term "a Parking Space" refers to the individual spaces within a Parking Location where a vehicle can be parked. Where the location of an individual Parking Space needs be identified, existing localization methods, such as those based on satellites like Global Positioning System (GPS), or based on the mobile network triangulation may be used by the smart phone and/or car system in combination with much more precise triangulation of the planed narrow band internet of things (NBIoT). If NBIoT is used, then since NBIoT will use existing Universal Mobile Telecommunications System (UMTS) devices, a Communication Unit can be used that also contains this functionality i.e. that is able to use new capabilities of the network (800MHz Band 20 and 900MHz Band 8) as outlined by the 3rd Generation Partnership Project (3GPP) standardization body.

The term "Parking Event" refers to the action of a vehicle either arriving and locating at a Parking Space or a vehicle leaving a Parking Space.

The term "Parking Signature" refers to a set of data that indicates that a Parking Event is taking place. This may include proximity data gathered by proximity sensors mounted on a second vehicle that monitors the second vehicle's proximity to a first vehicle as the first vehicle either enters a Parking Space or leaves a Parking Space.

Hereinafter, a parking space judgment system for determining the parking flux of vehicles at one or more parking locations according to exemplary embodiments of the present invention will be described in detail with reference to the accompanying drawings.

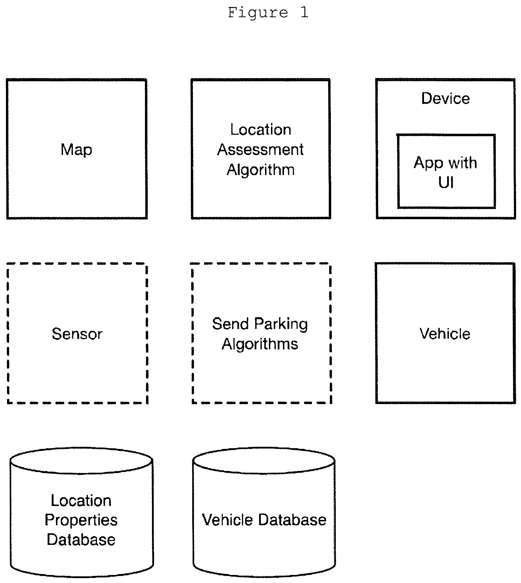

FIG. 1 is a schematic illustrating a system according to an embodiment of the present invention.

Referring to FIG. 1, the system, according to the embodiment of the present invention will involve a vehicle (the "Vehicle") being used for a journey that will end with the Vehicle being parked. The system may comprise a map (the "Map") used to guide the Vehicle, including areas known to be Parking Locations.

An application (the "App") running on a device (the "Device") such as a Smartphone, which includes a method to gather information from the user and also provide information to the user (via the User Interface "UI"). The Device may be a general purpose device such as a smartphone, or may be a 'specific' device such as GPS device, which in turn may be portable or may be integrated within the Vehicle.

In a preferred embodiment, a sensor (the "Sensor") either within the Vehicle or the Device that is able to sense data (the "Sensed Data") may be used to classify parking maneuvers. An example of such a sensor would be an inertial sensor that is able to measure acceleration and orientation.

In another preferred embodiment, a plurality of algorithms (the "Self-Parking Algorithms") may be used to control the vehicle as it parks.

The system may comprise a database (the "Location Properties Database") storing data pertaining to various Parking Locations. Examples of data stored include average size of Parking Spaces, height of curb etc.

The system may further comprise a database (the "Vehicle Database") storing either:
a. Data pertaining to the previous parking maneuvers that have been undertaken in the Vehicle.
   i. This may include motion data gathered by the Sensor that indicates the various motions that took place during the parking maneuver, for example distance moved in various directions, angle of rotation etc.
   ii. Where the Sensor is contained in the user's Device then the dimensions of the vehicle being parked may also be required.
   iii. Depending on the embodiment, the data may also be associated with the driver of the Vehicle at the time of the parking maneuver.
b. Data pertaining to the Self-Parking Algorithms that the Vehicle uses during automatic parking maneuvers.

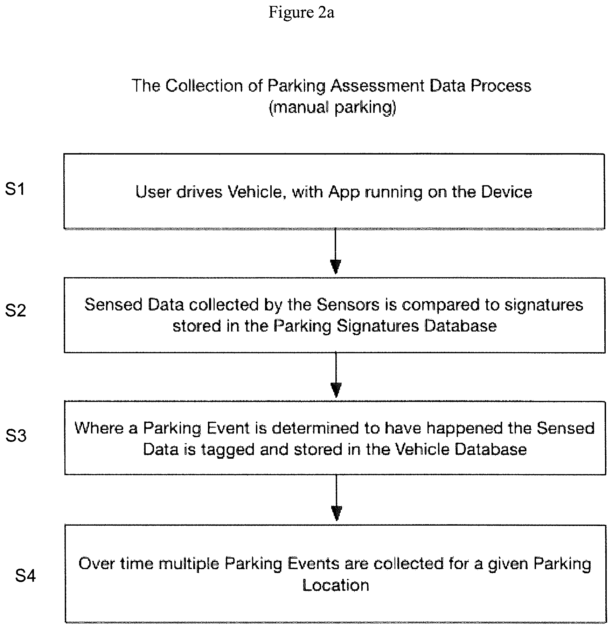

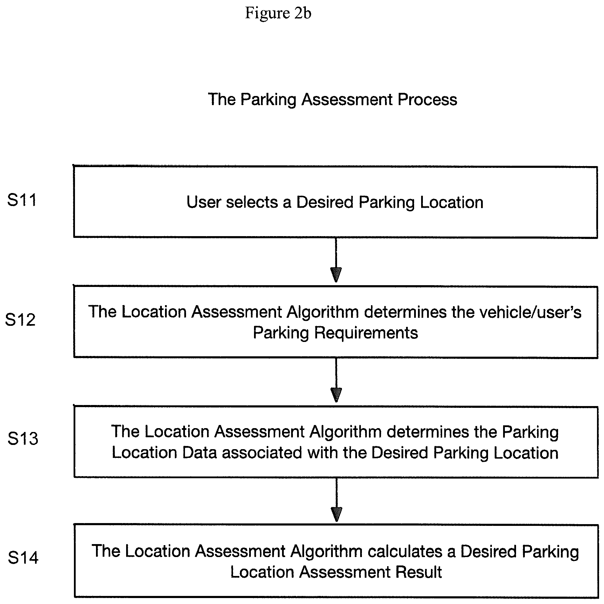

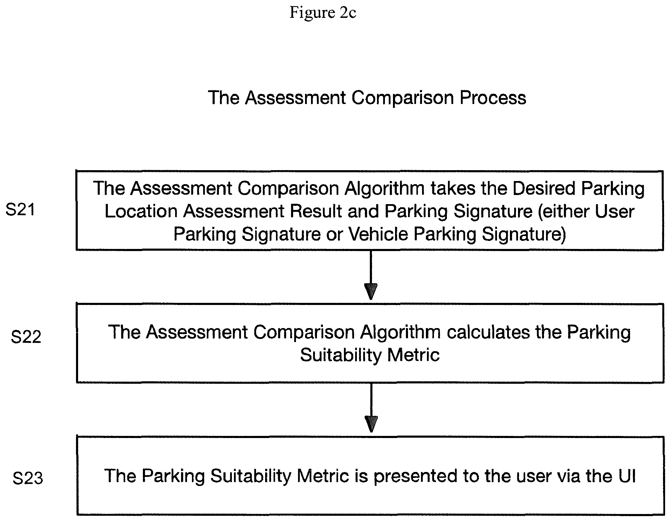

Figs. 2a, 2b and 2c are schematics of the three processes used in the embodiment of the present invention.

FIG. 2a is a schematic of the Collection of Parking Assessment Data Process according to an embodiment of the present invention. The Collection of Parking Assessment Data Process is only used when the vehicle is being manually parked.

Referring to FIG. 2a, in Step S1, the user drives a vehicle which comprises a device with a software application (App). The App runs on the device and controls the gathering of information from the user. In embodiments where sensors are positioned within the device, the App controls the gathering data pertaining to the vehicle during parking maneuvers. For example, the sensors collect sensed data such as motion data.

The sensed data is compared to Parking Signatures stored in the Parking Signatures Database in Step S2. When a Parking Event is detected, the Sensed Data is tagged with the Parking Event data and stored in the Vehicle Database in Step S3.

In Step S4, multiple sets of Sensed Data are collected from multiple users over time. Therefore, a given Parking Location can have a set of data describing how people maneuver their vehicles when parking there and a given user can have a set of data describing how they maneuver their vehicles in various Parking Locations.

FIG. 2b is a schematic of the Parking Assessment Process according to an embodiment of the present invention. Referring to FIG. 2b, in Step S11, the user selects a Parking Location (defined as the "Desired Parking Location"). This may be an explicit selection, or the user may just select a desired destination on a GPS application, and the nearest Parking Location may then be selected by the GPS application. This selection may also be performed via a "map" type App.

In Step S12, the Location Assessment Algorithm determines the Vehicle's Parking Requirements by querying the Vehicle Database.

In Step S13, the Location Assessment Algorithm determines the Parking Location Data by querying the Location Properties Database for the Desired Parking Location.

In Step S14, the Location Assessment Algorithm calculates a Desired Parking Location Assessment Result. The Location Assessment Algorithm compares the Vehicle Parking Requirement and the Parking Location data to calculate a parking location assessment result.

An example of the Assessment Comparison Process used by the Location Assessment Algorithm is shown in FIG 2c.

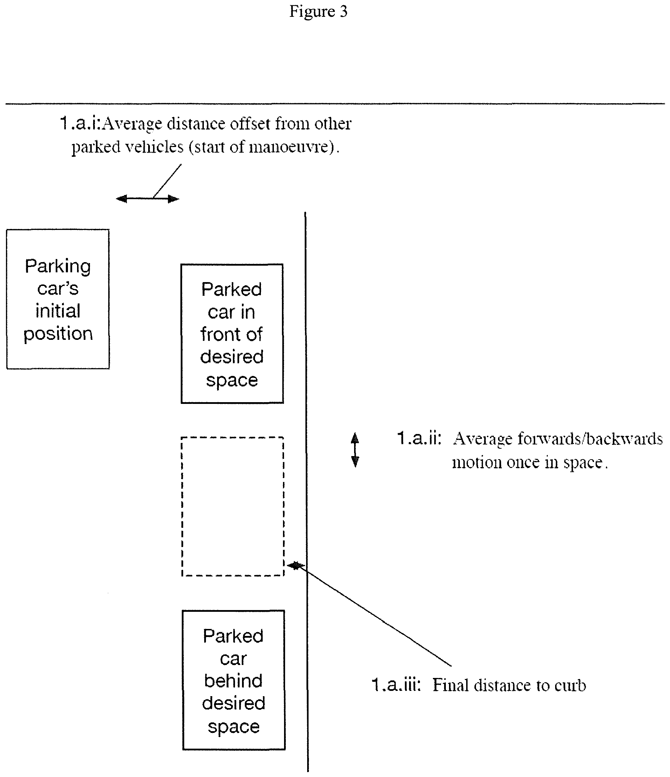

An example of how this is achieved is as follows:
a. The Vehicle's Parking Requirements are described in a number of parameters such as (for parallel parking FIG. 3):
   i. Average distance offset from other parked vehicles (start of maneuver) (1.a.i);
   ii. Average forwards/backwards motion once in Parking Space (1aii);
   iii. Average final distance to curb (1aiii);
   iv. Overlap with parked vehicle prior to orientation change;
   v. The same metrics can be derived from a Self-Parking Algorithm.
b. For forward/reverse parking, the parameters may include:
   i. Minimum distance to other parked vehicles (left/right) where a parking maneuver has been frequently undertaken (i.e. what is the 'tightest' space the vehicle regularly parks in - giving the smallest space the driver is comfortable parking in);
   ii. Distance to vehicle in front of parking vehicle;
   iii. Again, the same parameters can be derived from a Self-Parking Algorithm.
c. The Parking Location Data contains the same data, but this time gathered from many historic parking maneuvers by a plurality of vehicles. In effect this data describes the size of the Parking Spaces available, potentially with some more subtle data included such as relating to the orientation of the Parking Space, the amount of space allowed for parallel parking etc. Optionally:
   i. The Parking Location Data is classified by vehicle type, and potentially the vehicle drivers are also classified (i.e. groupings are formed indicating some people are comfortable parking in smaller spaces than others);
   ii. Note: the vehicles with Self-Parking Algorithms also collect data, as the data is pertaining to the attributes of the parking space rather than the vehicle's ability to park.
d. An Assessment Comparison Algorithm then provides data to show the 'fit' of the vehicle's parking capability (where in the case of manually parked vehicles this also includes the driver's ability/preference) and a space that is indicative of the Parking Location where the vehicle may be parked.
e. The result of this assessment may be informed to the user via the App and may be in the form of:
   i. A yes/no - i.e. some tolerances may be added to the vehicle/user's typical parking maneuvers and if the space is within these tolerances it is deemed fit for parking, and if outside it is deemed unfit;
   ii. Some kind of 'overlap' or percentage guidance. For example the typical space in a Parking Location may be labeled as 'within the 10% most difficult parking locations the user parks in'.

Hence, by referring to the Vehicle Parking Requirements described above and the available dimensions at the time of parking (e.g. the distance between the two parked vehicles on either side of the target space are the Parking Location Data), the Location Assessment Algorithm (FIG. 2b) makes a comparison to ensure the available parking space would at least meet the size requirement of the vehicle (found by the combination of all the individual vehicle Parking Requirement measurements).

To facilitate a better understanding of the present invention, three working scenarios are provided herewith.

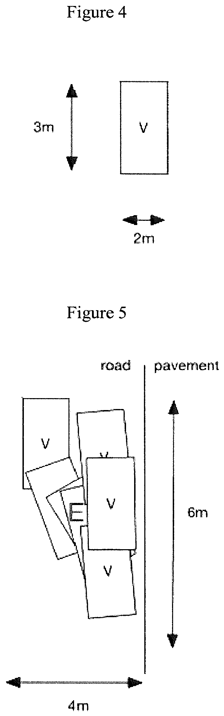

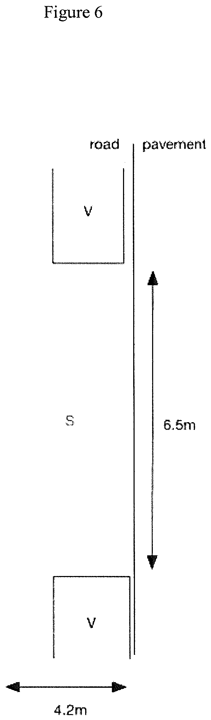

First example of a working scenario - Estimation due to historic parking actions:
A user owns a vehicle that is 3m x 2m in size (Fig 4). They manually park their vehicle, and over time their parking actions are tracked, either by a mobile device that includes various sensors, or by various sensors within the vehicle itself. A 'parking envelope' ('E' In Figure 5) is built up over time. Potential spaces are then compared to this parking envelope, and recommended only of the available space is likely to be larger than the parking envelope. In the example given in figure 6, the space S needs to be larger than the parking envelope (likely plus an additional tolerance) and hence needs to be 6.5m long.

Second example of a working scenario - Estimation due to automatic parking algorithms:
A vehicle has a set of parking algorithms that 'self-park' the car. These algorithms are able to manoeuvre the car in a controllable manner, and hence a parking envelope similar to that discussed in the previous example can be pre-emptively predicted. As before parking spaces in a potential parking area are assessed for the likelihood that they can support the parking envelope that will be required.

Third example of a working scenario - modification to suggestions:
Two users have vehicles with 'self-parking' capability - and hence an estimation can be made as to whether a parking space will likely be able to support the parking of their vehicles. User_1 however typically also opens their rear door to the maximum extent after parking (to remove a baby from the rear seat), whereas user_2 does not typically carry any passengers. Hence the spaces that are recommended to user_1 are further modified to allow this additional action (perhaps as a user selectable choice).

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A parking space judgment system to judge the suitability of parking a vehicle in one or more parking spaces in one or more parking locations, the system comprising:
a map to guide the vehicle;
a location properties database to store data pertaining to the parking locations;
a receiver unit to receive gathered data from the vehicle when the vehicle is making a parking maneuver;
a vehicle database to store data pertaining to a plurality of parking maneuvers of the vehicle and a plurality of self-parking algorithms for the vehicle;
a location assessment algorithm to determine a parking requirement of the vehicle; and
a user interface to receive instructions from a user and to provide a parking suitability metric to the user of the system.

2. The system according to claim 1, wherein the location assessment algorithm comprises data showing a fit on the parking capability of the vehicle; and a desired parking space of the parking location.

3. The system according to claim 1 or 2, wherein the self-parking algorithm is configured to control the parking of the vehicle into the parking space.

4. The system according to any one of claims 1 to 3, wherein the vehicle database includes data pertaining to motion, and/or distance and/or angle of rotation gathered by a sensor on the vehicle during parking maneuvers.

5. The system according to any one of claims 1 to 4, wherein the location assessment algorithm compares the vehicle parking requirement and the parking location data to calculate a parking location assessment result.

6. The system according to any one of claims 1 to 5, wherein the parking suitability metric comprises guidance on whether the parking space is deemed fit or unfit for parking.

7. The system according to any one of claims 1 to 6, wherein the parking suitability metric is calculated using the parking location assessment result and parking signature data.

8. A vehicle for data collection, the data for use in the system according to any one of claims 1 to 7 comprising:
a plurality of sensors for sensing data such as acceleration, and/or orientation, and/or motion of the vehicle in order to classify the data as parking maneuvers;
a controller configured to initiate the gathering of data by the sensors when the vehicle is making a parking maneuver;
a communication unit to send the gathered data to the system;
a software application to receive instructions and information from a user, and to display a parking suitability metric to the user.

9. A method for providing a user with guidance on the suitability of one or more parking spaces in one or more parking locations, the method comprising the steps of:
a) a parking assessment process to select a desired parking location and calculate a parking assessment result; and
b) an assessment comparison process to calculate a parking suitability metric based on the parking assessment result.

10. The method according to claim 9, wherein the parking assessment process comprises:
selecting the desired parking location (S11);
determining (S12) a vehicle parking requirement by querying a vehicle database;
determining (S13) parking location data by querying a location properties database; and
calculating (S14) the parking assessment result by using a location assessment algorithm, wherein the location assessment algorithm compares the vehicle parking requirement with the parking location data.

11. The method according to claim 10, wherein the location assessment algorithm comprises data showing a fit on a parking capability of the vehicle; and a parking space of the parking location.

12. The method according to any one of claims 9 to 11, wherein the assessment comparison process comprises:
using (S21) a parking location assessment result and parking signature data as input to calculate (S22) a parking suitability metric; and
displaying (S23) the parking suitability metric to the user via a user interface.

13. The method according to any one of claims 12,
wherein the parking signature data comprises the user parking signature data and/or the vehicle parking signature data.

14. The method according to claim 13,
wherein the user parking signature data is data on a parking capability and preference of the user, and
wherein the vehicle parking signature is data on a parking maneuver and the parking capability of the vehicle.

15. A method for collecting data with a vehicle according to claim 8, the method comprises:
collecting data sensed by a sensor on the vehicle, wherein the data includes motion data of the vehicle;
comparing (S2) the sensed data to a parking signature data to determine if a parking event occurs,
wherein the parking signature data comprises data that indicates an occurrence of the parking event;
storing the sensed data in a vehicle database when the sensed data is determined as the parking event (S3).

## Amended claims

### Amended claims in accordance with Rule 137(2) EPC.

1. A parking space judgment system to judge the suitability of parking a vehicle in one or more parking spaces in one or more parking locations, the system comprising:
a navigation database configured to store map data and parking location data used by a navigation system to determine a current location and guide the vehicle;
a receiver unit configured to receive gathered data from the vehicle when the vehicle is making a parking maneuver;
a vehicle database configured to store said gathered data pertaining to a plurality of parking maneuvers of the vehicle and a plurality of self-parking algorithms for the vehicle;
a location assessment algorithm configured to determine a parking requirement of the vehicle,
wherein the vehicle parking requirement is determined by querying a vehicle database;
and
a user interface to receive requests from a user concerning parking suitability and to provide a parking suitability metric to the user of the system,
wherein the location assessment algorithm is configured to compare the vehicle parking requirement and the parking location data to calculate a parking location assessment result,
wherein the parking suitability metric comprises guidance on whether the parking space is deemed fit or unfit for parking,
wherein the parking suitability metric is calculated using the parking location assessment result and parking signature data,
wherein the parking signature data comprises the user parking signature data and/or the vehicle parking signature data,
wherein the user parking signature data is data on a parking capability and preference of the user, and
wherein the vehicle parking signature data is data on a parking maneuver and the parking capability of the vehicle.

2. The system according to claim 1, wherein the location assessment algorithm comprises data showing a fit on the parking capability of the vehicle; and a desired parking space of the parking location.

3. The system according to claim 1 or 2, wherein the self-parking algorithm is configured to control the parking of the vehicle into the parking space.

4. The system according to any one of claims 1 to 3, wherein the vehicle database includes data pertaining to motion, and/or distance and/or angle of rotation gathered by a sensor on the vehicle during parking maneuvers.

5. A vehicle for data collection, the data for use in the system according to any one of claims 1 to 4 comprising:
a plurality of sensors configured to sense data such as acceleration, and/or orientation, and/or motion of the vehicle in order to classify the data as parking maneuvers;
a controller configured to initiate the gathering of data by the sensors when the vehicle is making a parking maneuver;
a communication unit configured to send the gathered data to the system;
a software application configured to receive requests concerning parking suitability and information from a user, and to display a parking suitability metric to the user.

6. A method for providing a user with guidance on the suitability of one or more parking spaces in one or more parking locations, the method comprising the steps of:
a) storing in a navigation database, map data and parking location data used by a navigation system to determine a current location and guide the vehicle;
b) receiving, via a receiver unit, gathered data from the vehicle when the vehicle is making a parking maneuver;
c) storing, via a vehicle database, gathered data pertaining to a plurality of parking maneuvers of the vehicle and a plurality of self-parking algorithms for the vehicle;
d) determining a parking requirement of the vehicle by using a location assessment algorithm,
wherein the vehicle parking requirement is determined by querying a vehicle database;
e) receiving, via a user interface, requests from a user concerning parking suitability and providing a parking suitability metric to the user of the system,
wherein the location assessment algorithm compares the vehicle parking requirement and the parking location data to calculate a parking location assessment result,
wherein the parking suitability metric comprises guidance on whether the parking space is deemed fit or unfit for parking,
wherein the parking suitability metric is calculated using the parking location assessment result and parking signature data,
wherein the parking signature data comprises the user parking signature data and/or the vehicle parking signature data,
wherein the user parking signature data is data on a parking capability and preference of the user, and
wherein the vehicle parking signature is data on a parking maneuver and the parking capability of the vehicle.

7. The method according to claim 6, further comprising
a parking assessment process to select a desired parking location and calculate a parking assessment result; and
an assessment comparison process to calculate the parking suitability metric based on the parking assessment result.

8. The method according to claim 6 or 7, wherein the parking assessment process comprises:
selecting the desired parking location (S11);
determining (S13) parking location data by querying a location properties database; and
calculating (S14) the parking assessment result by using the location assessment algorithm.

9. The method according to claim 8, wherein the location assessment algorithm comprises data showing a fit on a parking capability of the vehicle; and a parking space of the parking location.

10. The method according to any one of claims 6 to 9, wherein the assessment comparison process comprises:
displaying (S23) the parking suitability metric to the user via the user interface.

11. A method for collecting data with a vehicle according to claim 5, the method comprises:
collecting data sensed by a sensor on the vehicle, wherein the data includes motion data of the vehicle;
comparing (S2) the sensed data to the parking signature data to determine if a parking event occurs,
wherein the parking signature data comprises data that indicates an occurrence of the parking event;
storing the sensed data in the vehicle database when the sensed data is determined as the parking event (S3).
